# EUROPÄISCHE PATENTANMELDUNG

(11) **EP 4 663 898 A1**
(43) Veröffentlichungstag der Anmeldung: **17.12.2025**
(21) Anmeldenummer: 25175234.1
(22) Anmeldetag: 09.05.2025
(51) Int. Cl.: F01D 5/14, F01D 9/04, F01D 25/24, F01D 11/00, B22F 5/04, B33Y 80/00

(54) **LEITSCHAUFELELEMENT FÜR EINEN VERDICHTER EINER STRÖMUNGSMASCHINE UND STRÖMUNGSMASCHINE**

(30) Priorität: 12.06.2024 DE 102024116479
(71) Anmelder: MTU Aero Engines AG, 80995 München (DE)
(72) Erfinder: von Brauneck, Dennis, 80995 München (DE); Wunderer, Roland, 80995 München (DE); Ertl, Franz-Josef, 80995 München (DE)

(57) **Zusammenfassung**

Ein Leitschaufelelement 10 für einen Verdichter einer Strömungsmaschine umfasst ein Schaufelblatt 22 und ein an einem radial äußeren Ende des Schaufelblatts 22 angeordnetes Deckband 12. Das Deckband 12 weist an einer radial äußeren Seite einen Befestigungsabschnitt 14 zur Verbindung mit einem Gehäuse 30 der Strömungsmaschine auf. Das Deckband 12 weist an einer radial inneren Seite eine innere Oberfläche 16 auf, die in einer Schnittansicht senkrecht zur Umfangsrichtung U zumindest eine nach radial innen vorstehende Erhebung aufweist. Die innere Oberfläche 16 des Deckbands 12 weist eine größere axiale Ausdehnung als eine axiale Breite des Schaufelblatts 22 auf. Eine Strömungsmaschine, insbesondere eine Gasturbine für ein Flugtriebwerk, weist wenigstens das Leitschaufelelement 10 auf.

## Beschreibung

Die Erfindung betrifft ein Leitschaufelelement für einen Verdichter einer Strömungsmaschine, ein Leitschaufelcluster und eine Strömungsmaschine.

Richtungsangaben wie "axial-" beziehungsweise "axial", "radial-" beziehungsweise "radial" und "Umfangs-" sind grundsätzlich auf die Maschinenachse der Strömungsmaschine bezogen zu verstehen, sofern sich aus dem Kontext nicht explizit oder implizit etwas Anderes ergibt.

Es ist bekannt, im sogenannten Ringraumkanal einer Strömungsmaschine Bereiche vorzusehen, die gegenüber einer idealen Ringraumgeometrie, die beispielsweise zylinder- oder konusförmig sein kann, erhaben sind, das heißt in den Ringraumkanal hineinragen, um die Strömungsverhältnisse im Ringraumkanal positiv zu beeinflussen.

Beispielsweise offenbart die Druckschrift DE 10 2016 211 315 A1 eine Schaufel, insbesondere eine Turbinenstufe einer Gasturbine, insbesondere einer Fluggasturbine, mit einem Schaufelfuß und einem mit dem Schaufelfuß verbundenen Schaufelblatt, wobei das Schaufelblatt eine Druckseite und eine Saugseite aufweist, und wobei der Schaufelfuß an seiner dem Schaufelblatt zugewandten radialen Außenseite wenigstens einen erhabenen Bereich aufweist. In der Lehre der Druckschrift wird vorgeschlagen, dass die Schaufel auf der Druckseite einen ersten erhabenen Bereich aufweist und auf der Saugseite einen zweiten erhabenen Bereich aufweist, wobei ein höchster Punkt des ersten erhabenen Bereiches im Wesentlichen direkt benachbart zur Druckseite angeordnet ist, und ein höchster Punkt des zweiten erhabenen Bereichs im Wesentlichen direkt benachbart zur Saugseite angeordnet ist.

Es ist eine Aufgabe der Erfindung, die Strömungsverhältnisse weiter zu verbessern, insbesondere Sekundärströmungen wie etwa Kanalwirbel zu vermeiden. Ferner ist es eine Aufgabe der Erfindung, ein Leitschaufelelement bereitzustellen, das einfach und kostengünstig zu fertigen ist.

Die Erfindung basiert auf der Idee, ein Leitschaufelelement für einen Verdichter einer Strömungsmaschine bereitzustellen, wobei das Leitschaufelelement in Bezug auf das Schaufelblatt in stromaufwärtiger Richtung verlängert ist und somit eine axiale Breite aufweist, die deutlich größer als die axiale Breite des Schaufelblatts ist. Damit wird mehr Gestaltungsspielraum beziehungsweise eine einfache Möglichkeit geschaffen, die innere Oberfläche des Ringraums auf kostengünstige Art und Weise mit einer Seitenwandkonturierung bereitzustellen.

Die Erfindung stellt ein Leitschaufelelement für einen Verdichter einer Strömungsmaschine bereit, umfassend ein Schaufelblatt und ein an einem radial äußeren Ende des Schaufelblatts angeordnetes Deckband, wobei das Deckband an einer radial äußeren Seite einen Befestigungsabschnitt zur Verbindung mit einem Gehäuse der Strömungsmaschine aufweist, das Deckband an einer radial inneren Seite eine innere Oberfläche aufweist, die in einer Schnittansicht senkrecht zur Umfangsrichtung zumindest eine nach radial innen vorstehende Erhebung aufweist, und die innere Oberfläche des Deckbands eine größere axiale Ausdehnung als die axiale Breite des Schaufelblatts aufweist.

Mit anderen Worten, das Leitschaufelelement weist zumindest ein Schaufelblatt auf und weist an seinem radial äußeren Ende das Deckband auf. Das Deckband hat als Schaufelfuß die Form einer Plattform und ist entlang der Umfangsrichtung der Strömungsmaschine ringförmig ausgebildet, um den durchströmten Bereich nach außen hin ringförmig zu begrenzen. Das Deckband ist demgemäß an einem radial äußeren Ende des Schaufelblatts angeordnet und weist an seiner Außenseite einen Befestigungsabschnitt zur Verbindung mit einem Liner beziehungsweise mit dem Gehäuse der Strömungsmaschine auf. Das Deckband weist an seiner radial inneren Seite eine innere Oberfläche auf, die den durchströmten Bereich nach radial außen hin begrenzt, und somit im Betriebszustand mit dem Strömungsfluid in direktem Kontakt steht. Die innere Oberfläche des Deckbands kann auch als äußere Wand des Ringraumes bezeichnet werden. Ferner weist die innere Oberfläche in einer Schnittansicht senkrecht zur Umfangsrichtung, d.h. in einer Schnittebene entlang der axialen Richtung und entlang der radialen Richtung zumindest eine nach innen vorstehende Erhebung beziehungsweise eine Vertiefung auf, die es ermöglicht, die Strömung so zu beeinflussen, dass Sekundärströmungen verringert werden können. Hiermit unterscheidet sich die innere Oberfläche beispielsweise von einer konischen Oberfläche, und weist demgemäß einer Erhebung und/oder Vertiefung auf, die zwischen dem stromaufwärtigen Rand und dem stromabwärtigen Rand der inneren Oberfläche liegt. Diese von einer zylinderförmigen oder konischen Ausbildung der inneren Oberfläche abweichende Gestaltung wird auch als Seitenwandkonturierung bezeichnet.

Mithilfe der Seitenwandkonturierung kann im Betriebszustand die Strömung besser geführt werden, die Anströmung des Schaufelblatts kann verbessert werden und Verluste der Strömungsmaschine beispielsweise durch turbulente Wirbel können verringert werden. Da ferner das Gehäuse gewöhnlich rotationssymmetrisch ausgeführt ist, kann mithilfe der Seitenwandkonturierung des Leitschaufelelements in einfacher Weise eine aerodynamisch günstige Anströmung des Schaufelblatts erreicht werden. Insbesondere ist die innere Oberfläche des Leitschaufelelements beziehungsweise des Deckbands in axialer Richtung größer als die axiale Breite des Schaufelblatts. Damit kann der Zustrom des Strömungsmediums auf das Schaufelblatt verbessert werden, da eine Seitenwandkonturierung stromaufwärtig vor dem Schaufelblatt vorgenommen werden kann. Ferner kann damit eine axiale Fläche zur Aufbringung der Konturierung vergrößert werden, und somit kann der Wirkungsgrad der Seitenwandkonturierung verbessert werden.

Ferner kann die Verlängerung des Deckbands einen Leckagepfad verlängern, der zwischen dem Gehäuse und dem Deckband entlang des Befestigungsabschnitts gebildet ist. Ein verlängerter Leckagepfad kann im Betriebszustand eine Leckageströmung durch den größeren Widerstand im Vergleich zu einem Leitschaufelelement verringern, das nicht über die Verlängerung des Deckbands verfügt.

Ferner kann durch die Verlängerung des Deckbands eine größere mechanische Stabilität des Leitschaufelelements bereitgestellt sein, und die größere mechanische Stabilität kann eine Kurzzeitschwingfestigkeit und eine Zeitschwingfestigkeit (HCF-/LCF-Verhalten) verbessern. Ferner kann ein Verhalten im Pumpfall insgesamt verbessert werden, da das Leitschaufelelement eine größere Stabilität aufweisen kann.

Die Erfindung weist weitere vorteilhafte Ausführungsbeispiele auf, die weitere Vorteile bereitstellen.

Gemäß einem weiteren vorteilhaften Ausführungsbeispiel ist vorgesehen, dass der Befestigungsabschnitt zur formschlüssigen Verbindung mit dem Gehäuse in radialer Richtung zumindest eine Hinterschneidung aufweist. Mit anderen Worten, der Befestigungsabschnitt kann hakenförmig ausgebildet sein, um formschlüssig durch das äußere Gehäuse beziehungsweise dem Liner gehalten zu sein. Dadurch weist dieses Ausführungsbeispiel den Vorteil auf, dass das Leitschaufelelement durch die formschlüssige Verbindung gehalten wird und keine weiteren Befestigungsmittel wie Bolzen oder Schrauben zur Verbindung mit dem äußeren Gehäuse notwendig sind.

Gemäß einem weiteren vorteilhaften Ausführungsbeispiel ist vorgesehen, dass das Deckband eine größere axiale Ausdehnung als eine axiale Ausdehnung des Befestigungsabschnitts aufweist. Mit anderen Worten, das Deckband weist eine größere axiale Länge als der Befestigungsabschnitte auf, der auf der Außenseite des Deckbands ausgebildet ist. Somit kann der Leckagepfad in besonders günstiger Weise verlängert werden, und es kann eine besondere Abstützungswirkung des Deckbands gegenüber dem Gehäuse beziehungsweise Liner erzielt werden. Hierbei kann das Deckband bevorzugt entweder stromaufwärts oder stromabwärts mindestens um 5 % der axialen Schaufelbreite über die Schaufelkante überstehen, bevorzugt kann das Deckband um mindestens 10% überstehen besonders bevorzugt um mindestens 12,5%.

Gemäß einem weiteren vorteilhaften Ausführungsbeispiel ist vorgesehen, dass das Deckband in stromaufwärtiger Richtung über den Befestigungsabschnitt hinaussteht. Mit anderen Worten, das Deckband ist in Bezug auf die Ausdehnung des Befestigungsabschnitts in stromaufwärtiger axialer Richtung verlängert, und steht über den Befestigungsabschnitt hinaus. Damit wird eine besondere Abstützungswirkung des Deckbands gegen das Gehäuse erzielt, der Leckagepfad wird verlängert und Vibrationen des Leitschaufelelements können reduziert werden. Insbesondere kann eine Steifigkeit des Leitschaufelelements erhöht werden, sodass eine Zeitschwingfestigkeit (HCF-/LCF-Verhalten) günstig beeinflusst werden kann.

Gemäß einem weiteren vorteilhaften Ausführungsbeispiel ist vorgesehen, dass das Deckband in stromaufwärtiger Richtung über das Schaufelblatt hinaussteht, und dazu eingerichtet ist, in einem Montagezustand in eine Aussparung des Gehäuses hineinzustehen. Mit anderen Worten, das Deckband ist in Bezug auf das Schaufelblatt in stromaufwärtiger Richtung verlängert, und kann in eine Aussparung des Gehäuses hineinstehen. Damit kann die innere Oberfläche des Deckbands beispielsweise derart gestaltet werden, dass sie an die innere Oberfläche des Gehäuses beziehungsweise des Liners stufenlos anschließt. Somit kann das Leitschaufelelement in besonders vorteilhafter Weise gestaltet werden, um eine Anströmung des Schaufelblatts günstig zu beeinflussen.

Gemäß einem weiteren vorteilhaften Ausführungsbeispiel ist vorgesehen, dass das Deckband in stromaufwärtiger Richtung einen Verlängerungsabschnitt aufweist, der auf seiner radial äußeren Seite eine gerillte Oberfläche aufweist. Mit anderen Worten, die vorstehend beschriebene Verlängerung des Deckbands ist als Verlängerungsabschnitt bezeichnet, wobei dieser auf seiner radial äußeren Seite Rillen aufweist, die entlang der Umfangsrichtung ausgebildet sind. Damit ist das Leitschaufelelement dazu ausgebildet, in entsprechende Rillen des Gehäuses einzugreifen um somit eine besonders vorteilhafte Verlängerung des Leckagepfads zu erreichen. Damit kann der Strömungswiderstand für die Leckageströmung weiter erhöht werden und somit eine Effizienz der Turbine durch eine verminderte Leckageströmung an dem Schaufelblatt vorbei verbessert werden.

Gemäß einem weiteren vorteilhaften Ausführungsbeispiel ist vorgesehen, dass das Leitschaufelelement mit dem Schaufelblatt und dem Deckband einstückig, insbesondere mittels eines additiven Fertigungsverfahrens, ausgebildet ist. Mit anderen Worten, das Leitschaufelelement kann beispielsweise aus einem einzigen Guss- beziehungsweise Schmiedeteil hergestellt sein. Ferner kann das Leitschaufelelement beispielsweise durch eine spanende Bearbeitung hergestellt sein, wobei das Deckband und das Schaufelblatt einstückig mit dem Leitschaufelelement ausgebildet sind. Eine besonders bevorzugte Ausführungsform sieht vor, dass ein additives Fertigungsverfahren beziehungsweise ein 3D-Druckverfahren verwendet wird, mit dem eine besonders vorteilhafte kostengünstige Fertigung des Leitschaufelelements möglich ist.

Gemäß einem weiteren Aspekt der Erfindung ist ein Leitschaufelcluster für eine Strömungsmaschine, insbesondere eine Gasturbine, mit einem Leitschaufelelement gemäß der vorstehenden Beschreibung bereitgestellt, wobei das Leitschaufelelement mindestens zwei in Umfangsrichtung benachbart angeordnete Schaufelblätter aufweist, die über das Deckband miteinander verbunden sind. Mit anderen Worten, das Leitschaufelelement kann beispielsweise zwei, drei, vier, fünf oder auch mehr Schaufelblätter aufweisen und kann ein Deckband aufweisen, das die Schaufelblätter verbindet, die in Umfangsrichtung benachbart zueinander angeordnet sind. Das Leitschaufelelement kann segmentförmig ausgebildet sein und kann zusammen mit weiteren Leitschaufelelementen einen Leitschaufelkranz ausbilden, der zusammen mit einem Laufschaufelrad eine Stufe einer Strömungsmaschine, insbesondere einer Gasturbine beziehungsweise eines Verdichters einer Gasturbine, ausbildet. Durch die Fertigung eines Leitschaufelclusters insbesondere mittels des additiven Fertigungsverfahrens kann eine besonders kostengünstige Herstellung des Leitschaufelelements erzielt werden.

Gemäß einem weiteren Aspekt der Erfindung ist eine Strömungsmaschine, insbesondere eine Gasturbine für ein Flugtriebwerk bereitgestellt, wobei die Strömungsmaschine wenigstens ein Leitschaufelelement gemäß der vorstehenden Beschreibung und/oder wenigstens ein Leitschaufelcluster gemäß der vorstehenden Beschreibung umfasst.

Gemäß einem weiteren vorteilhaften Ausführungsbeispiel ist vorgesehen, dass das Gehäuse der Strömungsmaschine eine Stufe in radialer Richtung aufweist, und das Gehäuse dazu ausgebildet ist, das Deckband des Leitschaufelelements gemäß der vorstehenden Beschreibung derart aufzunehmen, dass eine innere Oberfläche des Gehäuses stufenlos an die innere Oberfläche des Deckbands anschließt. Dadurch, dass an dem Übergang von dem Gehäuse (beziehungsweise dem Liner) keine Stufe ausgebildet ist, können im Betriebszustand Wirbel vermieden werden, und es kann eine besonders bevorzugte Strömungsführung erzielt werden.

Nachfolgend ist die Erfindung unter Bezugnahme auf die beiliegenden Figuren beispielhaft und nicht einschränkend beschrieben.

Hierbei zeigen:
- FIG. 1: eine schematische Schnittdarstellung eines Leitschaufelelements im Stand der Technik; und
- FIG. 2: eine schematische Schnittdarstellung eines Leitschaufelelements gemäß der vorliegend offenbarten Technologie.

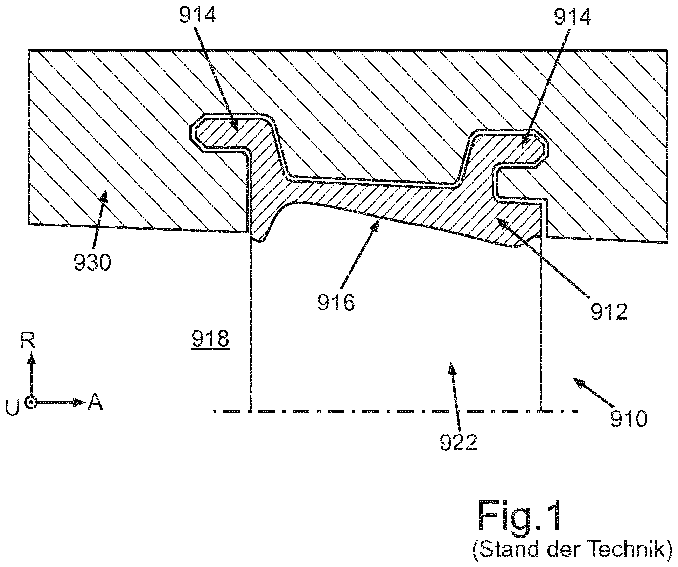

**FIG. 1** zeigt ein Leitschaufelelement 910 im Stand der Technik in einer schematischen Schnittansicht senkrecht zur Umfangsrichtung U. Das Leitschaufelelement 910 umfasst ein Deckband 912, einen Befestigungsabschnitt 914, eine innere Oberfläche 916 und ein Schaufelblatt 922. Das Leitschaufelelement 910 ist in das Gehäuse 930 eingebracht und wird von dem Gehäuse 930 formschlüssig gehalten. Im unteren Teil von **FIG. 1****,** das heißt nach radial innen der Strömungsmaschine, ist der Strömungsbereich 918 gelegen. Die Schnittdarstellung ist senkrecht zu einer Umfangsrichtung gezeigt, und eine axiale Richtung A liegt in **FIG. 1** in der Links-Rechts-Richtung. Zwischen dem Leitschaufelelement 910 und dem Gehäuse 930 ist ein Leckagepfad vorhanden, der es einem Strömungsfluid ermöglicht, entlang des Spaltes zwischen dem Leitschaufelelement 910 und dem Gehäuse 930 das Schaufelblatt 922 zu umgehen. Eine Fluidströmung entlang des Leckagepfads trägt daher nicht zur Effizienz der Strömungsmaschine bei.

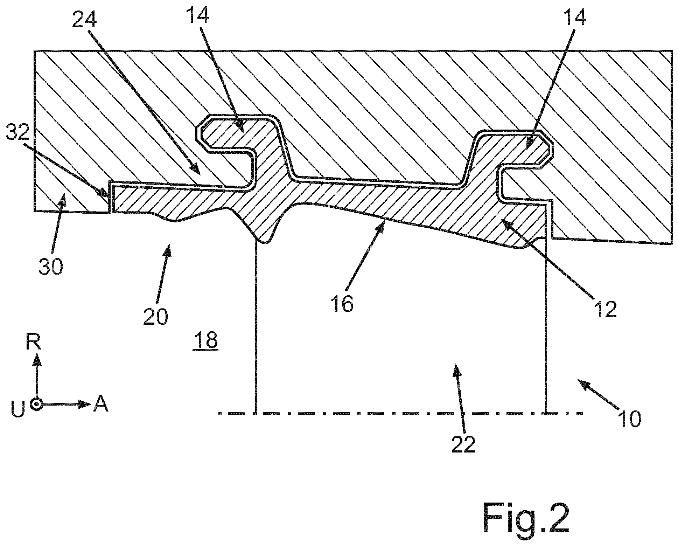

**FIG. 2** zeigt in ähnlicher schematischer Ansicht wie **FIG. 1** ein Leitschaufelelement 10 gemäß der vorliegend offenbarten Technologie. Das Leitschaufelelement 10 umfasst ein Deckband 12, einen Befestigungsabschnitt 14, eine innere Oberfläche 16, einen Verlängerungsabschnitt 20 und eine Hinterschneidung 24. Das Leitschaufelelement 10 ist somit in axialer Richtung A stromaufwärts verlängert, um den Verlängerungsabschnitt 20 zu umfassen. Das Schaufelblatt 22 weist in axialer Richtung A eine geringere Ausdehnung auf als das Deckband 12, das in Bezug auf das Leitschaufelelement 910 gemäß **FIG. 1** um den Verlängerungsabschnitt 20 verlängert ist. Das Leitschaufelelement 10 weist an seinem radial äußeren Ende einen Befestigungsabschnitt 14 auf, der gemäß **FIG. 2** eine Hinterschneidung 24 umfasst. Der Befestigungsabschnitt 14 kann gemäß **FIG. 2** in Form von zwei hakenförmigen Vorsprüngen ausgebildet sein, die das Leitschaufelelement 10 formschlüssig durch das Gehäuse 30 halten lassen. Das Gehäuse 30 kann auch ein Liner sein, der ein oder mehrere Leitschaufelelemente 10 segmentartig hält und nach Anbringung der Leitschaufelelemente 10 in das Gehäuse eingebracht und befestigt wird. Der Befestigungsabschnitt 14 dient somit zur formschlüssigen Verbindung mit dem Gehäuse 30 der Strömungsmaschine.

Das Schaufelblatt 22 weist an seinem radial äußeren Ende das Deckband 12 auf. Das Deckband 12 weist an seiner radial inneren Seite die innere Oberfläche 16 auf. Diese innere Oberfläche 16 wird auch als Seitenwandkonturierung bezeichnet, da sie eine Konturierung aufweist, die die innere Oberfläche von einer idealen Zylinderform beziehungsweise von einer konischen Form unterscheidet. Die innere Oberfläche 16 ist eine äußere Wand des Ringraums, die den im Betriebszustand durchströmten Strömungsbereich 18 begrenzt, und steht somit im Betriebszustand der Strömungsmaschine mit dem Strömungsfluid in direktem Kontakt. Gemäß der vorliegend offenbarten Technologie weist die innere Oberfläche 16 zumindest eine nach innen radial vorstehende Erhebung auf. Die innere Oberfläche 16 weist eine größere axiale Ausdehnung als die axiale Breite des Schaufelblatts 22 auf. Ferner ist die axiale Ausdehnung (die Ausdehnung in axialer Richtung A) der inneren Oberfläche 16 größer als die axiale Ausdehnung des Befestigungsabschnitts 14 zur formschlüssigen Verbindung mit dem Gehäuse 30. Ferner steht das Deckband 12 in stromaufwärtiger Richtung über den Befestigungsabschnitt 14 hinaus. Zudem ist in **FIG. 2** erkennbar, dass das Deckband 12 in stromaufwärtiger Richtung über das Schaufelblatt 22 hinaussteht. Ferner steht das Deckband 12 in eine Aussparung des Gehäuses 30 hinein, das die Stufe 32 aufweist. Mit anderen Worten, das Gehäuse 30 weist eine Stufe 32 in radialer Richtung R auf. Somit kann erreicht werden, dass eine innere Oberfläche des Gehäuses 30 stufenlos an die innere Oberfläche des Deckbands 12 anschließt. Vorteilhafterweise ist das Leitschaufelelement 10 einstückig ausgebildet, um das Deckband 12 und das Schaufelblatt 22 zu umfassen.

Gemäß einem vorteilhaften Ausführungsbeispiel ist das Leitschaufelelement 10 durch ein additives Fertigungsverfahren ausgebildet und benötigt dadurch vorteilhafterweise nur wenig Nacharbeit. Das Leitschaufelelement kann hierzu von einer Hinterkante (in Strömungsrichtung) zu einer Vorderkante oder von der Vorderkante zu der Hinterkante aufgebaut werden. Ferner wird durch das additive Fertigungsverfahren weniger Material benötigt. Weist das Leitschaufelelement 10 mehrere Schaufelblätter 22 auf, die zueinander benachbart sind und die über das Deckband 12 miteinander verbunden sind, so spricht man von einem Leitschaufelcluster für die Strömungsmaschine. Wird das Leitschaufelcluster mittels des additiven Fertigungsverfahrens hergestellt, so können hierdurch weitere Kostenvorteile erzielt werden. Ferner kann durch das Leitschaufelcluster eine vorteilhafte höhere mechanische Stabilität erzielt werden. Dennoch können das erfindungsgemäße Leitschaufelelement und das erfindungsgemäße Leitschaufelcluster in üblicher Weise montiert werden. Vorteilhafterweise ist die Strömungsmaschine eine Gasturbine für ein Flugtriebwerk.

Der Leckagepfad, der zwischen dem Leitschaufelelement 10 und dem Gehäuse 30 ausgebildet ist, ist gemäß **FIG. 2** gegenüber **FIG. 1** um den Verlängerungsabschnitt 20 verlängert, sodass ein Widerstand durch den Leckagepfad erhöht ist und eine Leckageströmung durch den Leckagepfad entsprechend verringert ist. Es ist zu bemerken, dass vorteilhafterweise der Leckagepfad weiter verlängert werden kann, indem der das Deckband beispielsweise an seiner Außenseite Rillen oder Vorsprünge aufweist, die in entsprechende Rillen oder Vertiefungen des Gehäuses 30 eingreifen.

Die Seitenwandkonturierung der inneren Oberfläche 16 kann dazu verwendet werden, eine besonders aerodynamisch günstige Anströmung des Schaufelblatts 22 zu erreichen. Da durch die additive Fertigung das Leitschaufelelement 10 besonders einfach zu fertigen ist, ist es in besonders einfacher Weise möglich, eine aerodynamisch günstige Anströmung des Schaufelblatts 22 zu erreichen.

### Bezugszeichenliste:

- 10: Leitschaufelelement
- 12: Deckband
- 14: Befestigungsabschnitt
- 16: innere Oberfläche
- 18: Strömungsbereich
- 20: Verlängerungsabschnitt
- 22: Schaufelblatt
- 24: Hinterschneidung
- 30: Gehäuse
- 32: Stufe
- 910: Leitschaufelelement
- 912: Deckband
- 914: Befestigungsabschnitt
- 916: Oberfläche
- 918: Strömungsbereich
- 922: Schaufelblatt
- 930: Gehäuse
- A: Axialrichtung
- R: Radialrichtung
- U: Umfangsrichtung

## Patentansprüche

1. Leitschaufelelement (10) für einen Verdichter einer Strömungsmaschine, umfassend ein Schaufelblatt (22) und ein an einem radial äußeren Ende des Schaufelblatts (22) angeordneten Deckband (12), wobei
das Deckband (12) an einer radial äußeren Seite einen Befestigungsabschnitt (14) zur Verbindung mit einem Gehäuse (30) der Strömungsmaschine aufweist,
das Deckband (12) an einer radial inneren Seite eine innere Oberfläche (16) aufweist, die in einer Schnittansicht senkrecht zur Umfangsrichtung (U) zumindest eine nach radial innen vorstehende Erhebung und/oder eine nach radial außen eingerückte Mulde aufweist,
**dadurch gekennzeichnet, dass** die innere Oberfläche (16) des Deckbands (12) eine größere axiale Ausdehnung als die axiale Breite des Schaufelblatts (22) aufweist.

2. Leitschaufelelement (10) nach Anspruch 1, **dadurch gekennzeichnet, dass** der Befestigungsabschnitt (14) zur formschlüssigen Verbindung mit dem Gehäuse (30) in radialer Richtung (R) zumindest eine Hinterschneidung (24) aufweist.

3. Leitschaufelelement (10) nach Anspruch 1 oder 2, **dadurch gekennzeichnet, dass** das Deckband (12) eine größere axiale Ausdehnung als eine axiale Ausdehnung des Befestigungsabschnitts (14) aufweist.

4. Leitschaufelelement (10) nach einem der vorhergehenden Ansprüche, **dadurch gekennzeichnet, dass** das Deckband (12) in stromaufwärtiger und/oder stromabwärtiger Richtung über den Befestigungsabschnitt (14) hinaussteht.

5. Leitschaufelelement (10) nach einem der vorhergehenden Ansprüche, **dadurch gekennzeichnet, dass** die innere Oberfläche (16) des Deckbands (12) um mindestens 5%, bevorzugt mindestens 10% der axialen Breite des Schaufelblatts (22) stromauf und/oder stromab über die jeweilige Schaufelkante vorsteht.

6. Leitschaufelelement (10) nach einem der vorhergehenden Ansprüche, **dadurch gekennzeichnet, dass** das Deckband (12) in stromaufwärtiger Richtung über das Schaufelblatt (22) hinaussteht und dazu eingerichtet ist, in einem Montagezustand in eine Aussparung des Gehäuses (30) hineinzustehen.

7. Leitschaufelelement (10) nach einem der vorhergehenden Ansprüche, **dadurch gekennzeichnet, dass** das Deckband (12) in stromaufwärtiger Richtung einen Verlängerungsabschnitt (20) aufweist, der auf seiner radial äußeren Seite eine gerillte Oberfläche aufweist.

8. Leitschaufelelement (10) nach einem der vorhergehenden Ansprüche, **dadurch gekennzeichnet, dass** das Leitschaufelelement (10) mit dem Schaufelblatt (22) und dem Deckband (12) einstückig, insbesondere mittels eines additiven Fertigungsverfahrens, ausgebildet ist.

9. Strömungsmaschine, insbesondere eine Gasturbine für ein Flugtriebwerk, mit wenigstens einem Leitschaufelelement (10) nach einem der vorhergehenden Ansprüche und/oder wenigstens einem Leitschaufelcluster nach Anspruch 8.

10. Strömungsmaschine nach Anspruch 9, **dadurch gekennzeichnet, dass** das Gehäuse (30) eine Stufe (32) in radialer Richtung (R) aufweist, und das Gehäuse (30) dazu ausgebildet ist, das Deckband (12) des Leitschaufelelements (10) nach einem der Ansprüche 1 bis 7 derart aufzunehmen, dass eine innere Oberfläche des Gehäuses (30) stufenlos an die innere Oberfläche (16) des Deckbands (12) anschließt.
